# EUROPEAN PATENT SPECIFICATION

(11) **EP 2 949 714 B1**
(45) Date of publication and mention of the grant of the patent: **14.04.2021**
(21) Application number: 15163790.7
(22) Date of filing: 16.04.2015
(51) Int. Cl.: C09D 183/06, C03C 17/30

(54) **COATING TO PRODUCE DUST-REPELLENT GLASS SURFACES**
BESCHICHTUNG ZUR ERZEUGUNG STAUBABWEISENDER GLASOBERFLÄCHEN
REVÊTEMENT PERMETTANT DE PRODUIRE DES SURFACES DE VERRE REPOUSSANT LA POUSSIÈRE

(30) Priority: 30.05.2014 DE 102014008310
(43) Date of publication of application: 02.12.2015
(73) Proprietor: Ferro GmbH, 60327 Frankfurt (DE)
(72) Inventor: Hanich, Jürgen, 61462 Königstein (DE); Heck, Lothar, 60435 Frankfurt (DE); Schulz, Andreas, 61184 Karben (DE); Schuetze, Julian, 61440 Oberursel (DE)
(74) Representative: Reinhardt, Markus

(56) References cited:
- US-A- 3 269 981
- US-A1- 2012 040 179
- DATABASE WPI Week 201206 Thomson Scientific, London, GB; AN 2011-Q44857 XP002743874, -& CN 102 260 456 A (BYD CO LTD) 30 November 2011 (2011-11-30)
- DATABASE WPI Week 200879 Thomson Scientific, London, GB; AN 2008-N63062 XP002743875, -& JP 2008 274118 A (NITTO KAGAKU KK) 13 November 2008 (2008-11-13)

## Description

### Field of the invention

The present invention pertains to a coating composition which reduces the adherence of dust to glass and mirror surfaces. Moreover, the present invention pertains to its preparation, to a substrate provided with the coating composition, to the coating method, and to the use of the coating compositions according to the invention.

### Prior art

Dust and dirt repelling coatings on mirror and/or glass surfaces are essential in particular for solar installations and solar-thermal power plants where parabolic mirrors are used, for a constant high efficiency.

Solar-thermal power plants are thermal solar installations which harvest thermal energy from solar energy and turn it into solar current. The electromagnetic radiation of the sun is transformed into thermal energy. The radiant energy is given off in the form of quanta of radiation, so-called photons. When these photons strike a body, they are absorbed or reflected. In the case of absorption, the atoms of the body are placed in oscillations by the photons, thus producing heat. There are several kinds of solar-thermal power plants, such as solar farm, solar tower, and parabolic trough power plants, which operate by concentrating the direct radiation of the sun. Electricity is then produced via a heat exchanger and generator.

In the prior art there is a multitude of patents pertaining to dust and dirt repelling coatings.

Thus, for example, substrates exposed to contamination with dust having inorganic and organic components or soot and smoke, which for the most part consist of carbon, are treated with a hydrophobic coating which is dust and dirt repelling for at least a certain length of time. Coatings are also used with a certain self-cleaning effect by the familiar "lotus blossom" principle. However, the coatings known in the prior art are always only dust and dirt repelling for a certain length of time.

DE 10 2007 039 164 A1 describes a substrate coating which repels dust and can easily be cleaned of adhering inorganic and organic dirt with rain water. The coating material mentioned there contains first oxide particles of silane tetra or trialkoxides in a size range of 5-20 nm and second particles with a diameter in the size range of 80-300 nm, which can be chosen from among aluminum, silicon and titanium oxides, for example.

WO2011/031138 A2 describes a method for coating a transparent substrate with a dirt-repelling layer, wherein a silicate layer is deposited by means of plasma deposition. A first precursor containing an organosilane compound is mixed with a solvent to form a sol-gel preparation, which is applied to the substrate in the form of a film to form the coating.

WO2007/102960 A2 discloses a hydrophobic self-cleaning coating composition which contains pyrogenic silicic acid in a size range of 1000 to 4000 nm, a solvent or mixture of solvents chosen from hydrocarbons or linear or cyclical polydimethylsiloxanes with 2 to 10 dimethylsiloxy units. The hydrophobic properties are the result of a suitable hydrophobizing treatment, i.e., the treatment with at least one compound from the group of organosilanes, alkylsilanes, fluorinated silanes and/or disilazanes.

WO2008/027697 A1 describes perfluoropolyethersilanes, compositions which contain the perfluoropolyethersilanes and methods for treatment of substrates, especially substrates with a hard surface such as ceramics or glass, in order to make them water, oil, or dirt repellent.

WO2011/043973 A1 describes a coating composition which comprises a silsesquioxane hard coating resin component and a perfluoropolyethersilane as well as a method for the coating of substrates, especially substrates with a hard surface such as ceramics, metal or glass, in order to make them water, oil, or dirt repellent.

WO2008/027698 A1 describes an antireflection object, which comprises a substrate with an antireflection surface and a coating of a perfluoropolyethersilane thereon, and furthermore a method for applying a dirt-resistant coating on a substrate with an antireflection surface US 2012/040179 describes a coating composition comprising 50 wt-% methyltrichlorosilane and 50 wt-% isopropanol, used on glass or mirrors e.g. for solar cells, and having anti-soiling, especially dust-repellent properties.

### The problem

The problem to be solved by the invention is to discover a coating material which is easy to produce and furthermore economical. This coating material after being applied to a substrate such as glass or a mirror or other surface should produce a layer which steadily reduces the adherence of dust to the surfaces. The surface treated with the coating should also have a certain scratch resistance, as well as a resistance to moisture.

### Detailed specification of the invention

Surprisingly, it is possible to solve this problem by the preparation of a coating composition which comprises a polyalkylsiloxane with terminal hydroxyl groups or a mixture of different polyalkylsiloxanes with terminal hydroxyl groups, silicon tetrahalide or alkyl halogen silane or mixtures thereof, and an inert aprotic solvent.

As the polyalkylsiloxane one preferably uses polydimethylsiloxane silanol terminated (PDMS). However, this choice is not restrictive and any other polyalkylsiloxanes with terminal hydroxyl groups can be used. As examples one can mention poly(methylpropyl)siloxane, poly(methyloctyl)siloxane, poly(trifluoropropylmethyl)siloxane and poly(phenylmethyl)siloxane.

The silicon tetrahalide can be chosen from silicon tetrachloride or silicon tetrabromide, giving preference to silicon tetrachloride.

The alkyl halogen silane is chosen from among methyltrichlorosilane, dimethyldichlorosilane, chloropropyltrichlorosilane, or the corresponding bromine compounds.

The inert aprotic solvent is an aliphatic or cycloaliphatic or aromatic hydrocarbon or an ether.

The solvent is preferably an isoparaffin.

As the substrate one will use a glass or a mirror, especially a parabolic mirror. But other surfaces which need to be provided with a dust-repelling surface are also included. For example, substrates which are used in the flat glass industry or coatings on desktops, touchpanels, etc.

The preparation of the coating composition is characterized by the following steps:
- Preparation of a polyalkylsiloxane with terminal hydroxyl groups or a mixture of various polyalkylsiloxanes with terminal hydroxyl groups in an inert aprotic solvent, and
- adding of silicon tetrahalide or alkyl halogen silane as claimed or mixtures thereof in an inert
aprotic solvent.

The method for preparation of the coated substrate is characterized by the following steps:
- Application of the prepared coating composition to the substrate,
- Removal of excess coating composition on the substrate after 1-10 minutes,
- Drying of the coating composition on the substrate and
- Polishing of the coating composition on the substrate.

The coating composition is applied to the substrate by means of a dip method, film drawing frame, spiral doctor blade, roller or spray gun.

An excess of the coating composition is wiped off with a doctor blade or cloth or blown away with air.

Preferably the excess coating composition is removed after one minute.

After this, the coating composition is dried for 5 to 120 minutes, preferably 30 minutes at a temperature in the range of 20 to 150°C, preferably 120°C.

After the drying process, the surface of the coating is polished with a microfiber cloth.

Also described is the use of the coating composition for the coating of a substrate with a coating composition which is dust-repellent and scratch-resistant.

The substrate here is a glass or a mirror. A use is intended for parabolic mirrors for solar thermal power plants, among other things.

The invention is further described below by means of examples and sample embodiments, which do not limit the scope of the invention.

Various chlorosilanes are tested in combination with PDMS for the coating of solar glass.

Only single coatings are prepared. Each experiment is conducted twice. DCTS and TDH40 are silanes leading to compositions not according to the invention.

The following solutions in Exxol D80 are used:

| *Silane* | *g*/*mol solution concentration* | | |
|---|---|---|---|
| PDMS (Polydimethylsiloxane | 680 | A | 4.2% |
| silanol terminated) | | | |
| DCMS (Dimethyldichlorosilane) | 129 | B2 | 1.8% |
| SiCl₄ | 170 | C2 | 1.18% |
| | | C3 | 1.58% |
| | | C4 | 2.37% |
| Trichloromethylsilane (TCMS) | 149 | D2 | 1.39% |
| | | D3 | 2.08% |
| Chloropropyltrichlorosilane (CPTCS) | 212 | E2 | 1.97% |
| | | E3 | 2.96% |
| Dodecyltrichlorosilane (DCTS) | 304 | F2 | 2.82% |
| | | F3 | 4.24% |
| C₈F₁₃H₄SiCl₃ (TDH40) | 482 | G2 | 4.48% |
| | | G3 | 6.72% |

### Silane treatment

- Cleaning of the 10 cm x 10 cm x 2 mm panes, blowing with air
- Mix all solutions (B-G) freshly with solution A in the indicated proportion and apply with lacquer doctor blade (24 µm)
- After 1 min, rub and wipe off with a cloth
- Drying at 120° C for 5 to 60 min, preferably 30 min
- Let cool down
- Polish with microfiber cloth

### Test method

The polished plates are all half stressed (100 cycles), then placed in the 90° water bath for 1 h, blown off with air and dried. After this, the standard dust test is carried out (15 min).

For example, A-B2 (1:1) means: 4.2% solution of PDMS in Exxol D80 is mixed with a 1.8% solution of DCMS in Exxol D80 in a ratio of 1:1 and so used.

The mixture A-B2 and the other mixtures have to be prepared fresh prior to the application, since the contents react with each other, albeit slowly.

The dust test was conducted with iron oxide hydroxide (FeOOH). After this, a color measurement (CIELAB) of the dusted glass plate was done with a colorimetry instrument from the company Datacolor Model Mercury as compared to the undusted glass plate. The lower the ΔE value is, the less FeOOH clings to the glass plate. Results with ΔE values <3 (stressed {(100 cycles/90°)} and unstressed {(90°- 1 h)}) are examples, results with ΔE values >3 are comparison examples (here, experiments 7, 8, 11, 12 and 15).

| Experiment | Silane solutions | ΔE (90° C - 1 h) | ΔE (100 cycles/90° C) | Comment |
|---|---|---|---|---|
| 1a | A-B2 (1:1) | 0.2 | 0.6 | |
| 1b | A-B2 (1:1) | 0.2 | 1.0 | |
| 2a | A-C2 (1:1) | 0.5 | 0.6 | |
| 2b | A-C2 (1:1) | 0.6 | 0.7 | |
| 3a | A-C3 (1:1) | 0.5 | 0.5 | |
| 3b | A-C3 (1:1) | 0.5 | 0.7 | |
| 4a | A-C4 (1:1) | 0.4 | 0.4 | |
| 4b | A-C4 (1:1) | 1.0 | 7.6 | |
| | | | | |
| 4a2 | A-C4 (1:1) | 0.4 | 0.7 | Repetition 4a |
| 4b2 | A-C4 (1:1) | 0.4 | 1.2 | Repetition 4b |
| 5a | A-D2 (1:1) | 0.8 | 0.8 | |
| 5b | A-D2 (1:1) | 4.1 | 0.6 | |
| 5a2 | A-D2(1:1) | 0.6 | 4.4 | Repetition 5a |
| 5b2 | A-D3(1:1) | 0.7 | 1.1 | Repetition 5b |
| 6a | A-D3 (1:1) | 2.2 | 0.9 | |
| 6b | A-E2 (1:1) | 2.3 | 0.7 | |
| 7a | A-E2 (1:1) | 25.6 | 2.3 | Gray film after drying |
| 7b | A-E2 (1:1) | 13.6 | 2.2 | |
| 8a | A-E3 (1:1) | 20.2 | 2.1 | Gray film after drying |
| 8b | A-E3 (1:1) | 16.4 | 3.2 | |
| 9a | A-F2 (1:1) | 0.3 | 0.2 | |
| 9b | A-F2 (1:1) | 0.4 | 0.2 | |
| 10a | A-F3 (1:1) | 0.3 | 0.2 | |
| 10b | A-F3 (1:1) | 0.7 | 0.7 | |
| 11a | A-G2 (1:1) | 0.6 | 3.6 | Turbidity, precipitates white |
| 11b | A-G2 (1:1) | 0.6 | 3.8 | |
| 12a | A-G3(1:1) | 0.5 | 3.5 | Turbidity, precipitates white |
| 12b | A-G3 (1:1) | 0.3 | 5.2 | |
| 13a | A-B2-C2 (4:3:1) | 1.0 | 1.0 | |
| 13b | A-B2-C2 (4:3:1) | 0.5 | 0.7 | |
| 14a | A-B2-D2 | 0.3 | 0.6 | |
| | (4:3:1) | | | |
| 14b | A-B2-D2 (4:3:1) | 0.1 | 0.8 | |
| 15a | A-B2-E2 (4:3:1) | 1.2 | 2.7 | |
| 15b | A-B2-E2 (4:3:1) | 1.7 | 3.8 | |
| 16a | A-B2-F2 (4:3:1) | 0.4 | 0.8 | |
| 16b | A-B2-F2 (4:3:1) | 0.3 | 0.5 | |

Another point of the invention is that a glass plate or a mirror which have been coated according to the method of the invention, if their dust repelling properties diminish over time, can be coated once more after cleaning the surface and thus the dust repelling properties can be regenerated once more. This regeneration should be done in the installed condition. This means that all work steps occur as during the basic coating except for the step of drying at high temperatures. However, it is to be assumed that sunlight can already compensate for the drying step, so that the drying time might simply be longer. Optionally, the after-coated glass pane or mirror have to be additionally heated with an IR lamp or a hot air blower. In the laboratory, a drying at 60° C for 60 min showed good results for the after-coating.

Example: after the coating with PDMS/DCMS similar to the coating in example 1, the ΔE value after polishing was 1.3 (0.6). The glass pane was then placed in a 90° C hot water bath for 12 hours. After this, the ΔE value was 8.5 (8.8). It was then after-coated with PDMS/DMCS, and dried for 60 min at 60° C. After polishing, the ΔE value was 1.1 (1.9). The values in brackets are the ΔE values for the half pane that was stressed with 100 cycles, the values without brackets are the ΔE values for the half pane that was not stressed.

## Claims

1. Coating composition for the production of a dust-repelling coating on a substrate, comprising a polylkylsiloxane with terminal hydroxyl groups or a mixture of different polyalkylsiloxanes with terminal hydroxyl groups, silicon tetrahalide, alkyl halogen silane chosen from methyltrichlorosilane, dimethyldichlorosilane, chloropropyltrichlorosilane or the corresponding bromide compounds, or mixtures thereof, and an inert aprotic solvent.

2. Coating composition according to claim 1, wherein the polyalkylsiloxane is polydimethylsiloxane.

3. Coating composition according to claims 1-2, wherein the silicon tetrahalide is chosen from silicon tetrachloride or silicon tetrabromide.

4. Coating composition according to claims 1-3, wherein the inert aprotic solvent is an aliphatic or cycloaliphatic or aromatic hydrocarbon or an ether, preferably an isoparaffin.

5. Substrate provided with a coating composition according to claims 1-4.

6. Substrate according to claim 5, wherein the substrate is a glass or a mirror.

7. Method for preparation of the coating composition according to claims 1 to 4, **characterized by** the following steps:
- Preparation of a polyalkylsiloxane with terminal hydroxyl groups or a mixture of various polyalkylsiloxanes with terminal hydroxyl groups in an inert aprotic solvent, and
- adding of silicon tetrahalide or or one from methyltrichlorosilane, dimethyldichlorosilane, chloropropyltrichlorosilane or the corresponding bromide compounds or mixtures thereof in an inert aprotic solvent.

8. Method for preparation of the coated substrate according to claims 5 and 6, is **characterized by** the following steps:
- Application of the coating composition according to claims 1 to 4 and prepared according to claim 7 to the substrate,
- Removal of excess coating composition on the substrate after 1-10 minutes,
- Drying of the coating composition on the substrate and
- Polishing of the coating composition on the substrate.

9. Method according to claim 8, wherein the coating composition is applied to the substrate by means of film drawing frame, spiral doctor blade, roller or spray gun or by means of dip methods.

10. Method according to claims 8-9, wherein an excess of the coating composition is wiped off with a doctor blade or cloth or blown away with air.

11. Method according to claims 8-10, wherein the coating composition is dried for 5 to 120 minutes, preferably 30 minutes, at a temperature in the range of 20 to 150°C, preferably 120° C.

12. Method according to claims 8-11, wherein the surface of the coating is polished with a microfiber cloth.

13. Method according to claims 8-12, wherein the coating is regenerated in event of diminishing dust repulsion by repeating the method steps mentioned in claims 8 to 12.

14. Use of the coating composition according to claims 1-4 for the coating of a substrate with a coating which is dust-repellent and scratch-resistant.

15. Use according to claim 14, wherein the substrate is a glass or a mirror.

## Patentansprüche

1. Beschichtungszusammensetzung für die Herstellung einer staubabweisenden Beschichtung auf einem Substrat, umfassend ein Polyalkylsiloxan mit terminalen Hydroxylgruppen oder eine Mischung aus verschiedenen Polyalkylsiloxanen mit terminalen Hydroxylgruppen, Siliziumtetrahalogenid, Alkylhalogensilan ausgewählt aus Methyltrichlorsilan, Dimethyldichlorsilan, Chlorpropyltrichlorsilan oder den entsprechenden Bromidverbindungen oder Mischungen davon, und ein inertes aprotisches Lösemittel.

2. Beschichtungszusammensetzung nach Anspruch 1, wobei das Polyalkylsiloxan Polydimethylsiloxan ist.

3. Beschichtungszusammensetzung nach den Ansprüchen 1-2, wobei das Siliziumtetrahalogenid aus Siliziumtetrachlorid oder Siliziumtetrabromid ausgewählt wird.

4. Beschichtungszusammensetzung nach den Ansprüchen 1-3, wobei das inerte aprotische Lösemittel ein aliphatischer oder cycloaliphatischer oder aromatischer Kohlenwasserstoff oder ein Ether, vorzugsweise ein Isoparaffin, ist.

5. Substrat, versehen mit einer Beschichtungszusammensetzung nach den Ansprüchen 1-4.

6. Substrat nach Anspruch 5, wobei das Substrat ein Glas oder ein Spiegel ist.

7. Verfahren zur Herstellung der Beschichtungszusammensetzung nach den Ansprüchen 1-4, **gekennzeichnet durch** die folgenden Schritte:
- Bereitstellen eines Polyalkylsiloxans mit terminalen Hydroxylgruppen oder einer Mischung aus verschiedenen Polyalkylsiloxanen mit terminalen Hydroxylgruppen in einem inerten aprotischen Lösemittel
und
- Zugabe von Siliziumtetrahalogenid oder einem von Methyltrichlorsilan, Dimethyldichlorsilan, Chlorpropyltrichlorsilan oder den entsprechenden Bromidverbindungen oder Mischungen davon in einem inerten aprotischen Lösemittel.

8. Verfahren zur Herstellung des beschichteten Substrats nach den Ansprüchen 5-6, **gekennzeichnet durch** die folgenden Schritte:
- Aufbringen einer Beschichtungszusammensetzung nach den Ansprüchen 1-4 und hergestellt nach Anspruch 7 auf das Substrat,
- Entfernen von Überschuss Beschichtungszusammensetzung auf dem Substrat nach 1-10 Minuten,
- Trocknen der Beschichtungszusammensetzung auf dem Substrat und
- Polieren der Beschichtungszusammensetzung auf dem Substrat.

9. Verfahren nach Anspruch 8, wobei die Beschichtungszusammensetzung auf das Substrat mittels Filmziehrahmen, Spiralrakel, Rolle oder Spritzpistole oder mittels Tauchverfahren aufgebracht wird.

10. Verfahren nach den Ansprüchen 8-9, wobei ein Überschuss der Beschichtungszusammensetzung mit einem Rakel oder Tuch abgewischt wird oder mit Luft weggeblasen wird.

11. Verfahren nach den Ansprüchen 8-10, wobei die
Beschichtungszusammensetzung für 5-120 Minuten, vorzugsweise 30 Minuten, bei einer Temperatur im Bereich von 20-150 °C, vorzugsweise 120 °C, getrocknet wird.

12. Verfahren nach den Ansprüchen 8-11, wobei die Oberfläche der Beschichtung mit einem Mikrofasertuch poliert wird.

13. Verfahren nach den Ansprüchen 8-12, wobei bei nachlassender Staubabweisung die Beschichtung durch Wiederholen der in den Ansprüchen 8-12 genannten Verfahrensschritte regeneriert wird.

14. Verwendung der Beschichtungszusammensetzung nach den Ansprüchen 1-4 zum Beschichten eines Substrats mit einer Beschichtung, die staubabweisend und kratzbeständig ist.

15. Verwendung nach Anspruch 14, wobei das Substrat ein Glas oder ein Spiegel ist.

## Revendications

1. Composition de revêtement pour la production d'un revêtement repoussant la poussière sur un substrat, comprenant un polyalkylsiloxane avec des groupes hydroxyle terminaux ou un mélange de différents polyalkylsiloxanes avec des groupes hydroxyle terminaux, du tétrahalogénure de silicium, un alkyl halogéno silane choisi parmi le méthyltrichlorosilane, le diméthyldichlorosilane, le chloropropyltrichlorosilane ou les composés bromures correspondants, ou les mélanges de ceux-ci, et un solvant aprotique inerte.

2. Composition de revêtement selon la revendication 1, dans laquelle le polyalkylsiloxane est le polydiméthylsiloxane.

3. Composition de revêtement selon l'une des revendications 1 et 2, dans laquelle le tétrahalogénure de silicium est choisi parmi le tétrachlorure de silicium ou le tétrabromure de silicium.

4. Composition de revêtement selon l'une des revendications 1 à 3, dans laquelle le solvant aprotique inerte est un hydrocarbure aliphatique ou cyclcoaliphatique ou aromatique ou un éther, de préférence une isoparaffine.

5. Substrat pourvu d'une composition de revêtement selon l'une des revendications 1 à 4.

6. Substrat selon la revendication 5, dans lequel le substrat est un verre ou un miroir.

7. Procédé de préparation de la composition de revêtement selon l'une des revendications 1 à 4, **caractérisé par** les étapes suivantes :
- préparation d'un polyalkylsiloxane avec des groupes hydroxyle terminaux ou d'un mélange de divers polyalkylsiloxanes avec des groupes hydroxyle terminaux dans un solvant aprotique inerte ; et
- addition de tétrahalogénure de silicium ou d'un parmi le méthyltrichlorosilane, le diméthyldichlorosilane, le chloropropyltrichlorosilane ou les composés bromures correspondants, ou les mélanges de ceux-ci, dans un solvant aprotique inerte.

8. Procédé de préparation du substrat revêtu selon l'une des revendications 5 et 6, **caractérisé par** les étapes suivantes :
- application sur le substrat de la composition de revêtement selon l'une des revendications 1 à 4 et préparée selon la revendication 7 ;
- retrait de la composition de revêtement en excès sur le substrat après 1 - 10 minutes ;
- séchage de la composition de revêtement sur le substrat ; et
- polissage de la composition de revêtement sur le substrat.

9. Procédé selon la revendication 8, dans lequel la composition de revêtement est appliquée sur le substrat à l'aide d'un banc d'étirage de film, d'une lame de raclage en spirale, d'un rouleau ou d'un pistolet de pulvérisation ou au moyen de méthodes par immersion.

10. Procédé selon l'une des revendications 8 et 9, dans lequel un excès de la composition de revêtement est essuyé avec une lame de raclage ou un chiffon ou est soufflé avec de l'air.

11. Procédé selon l'une des revendications 8 à 10, dans lequel la composition de revêtement est séchée pendant 5 à 120 minutes, de préférence 30 minutes, à une température dans la plage de 20 à 150°C, de préférence de 120°C.

12. Procédé selon l'une des revendications 8 à 11, dans lequel la surface du revêtement est polie avec un chiffon en microfibres.

13. Procédé selon l'une des revendications 8 à 12, dans lequel le revêtement est régénéré en cas de diminution de la répulsion de poussière par répétition des étapes du procédé mentionnées dans l'une des revendications 8 à 12.

14. Utilisation de la composition de revêtement selon l'une des revendications 1 à 4 pour le revêtement d'un substrat par un revêtement qui repousse la poussière et est résistant aux rayures.

15. Utilisation selon la revendication 14, dans laquelle le substrat est un verre ou un miroir.
